# EUROPÄISCHE PATENTSCHRIFT

(11) **EP 1 184 116 B1**
(45) Veröffentlichungstag und Bekanntmachung des Hinweises auf die Patenterteilung: **14.06.2006**
(21) Anmeldenummer: 01119569.0
(22) Anmeldetag: 16.08.2001
(51) Int. Cl.: B23C 5/10, B23B 51/04

(54) **Bohrnutenfräser**
Slot drill
Outil de fraisage et de perçage

(30) Priorität: 01.09.2000 DE 10043016
(43) Veröffentlichungstag der Anmeldung: 06.03.2002
(73) Patentinhaber: WALTER AG, 72072 Tübingen (DE)
(72) Erfinder: Schneider, Thomas, 72145 Hirrlingen (DE); Bohnet, Siegfried, 72116 Mössingen (DE); Enderle, Klaus, Dr., 71691 Freiburg (DE)
(74) Vertreter: Rüger, Barthelt & Abel Patentanwälte

(56) Entgegenhaltungen:
- EP-A- 0 490 122
- EP-A- 0 639 418
- DE-A- 19 609 820
- DE-U- 9 114 310
- FR-A- 1 508 244
- GB-A- 2 079 656
- US-A- 4 293 252
- US-A- 4 693 641
- US-A- 5 542 795
- "Fraise a queue a rainurer et a surfacer-dresser" MACHINES PRODUCTION, Bd. 382, 16. Mai 1984 (1984-05-16), Seite 9 XP002184310 Boulogne
- PATENT ABSTRACTS OF JAPAN vol. 1999, no. 04, 30. April 1999 (1999-04-30) -& JP 11 000813 A (TOSHIBA TUNGALOY CO LTD), 6. Januar 1999 (1999-01-06)

## Beschreibung

Die Erfindung betrifft einen schneidplattenbestückten Bohrnutenfräser mit hoher Zerspanungsleistung.

Zerspanungswerkzeuge, die eine Bearbeitung zulassen, dienen zur spanenden Bearbeitung von Werkstücken unter axialem Vorschub des sich drehenden Werkzeugs. Dabei kommen die Schneidkanten des Zerspanungswerkzeugs mit dem Material des Werkstücks in dauernden Eingriff und führen einen im Wesentlichen nicht unterbrochenen Schnitt aus. Die Schneidenbelastung der stirnseitig angeordneten Schneidkanten ist dadurch gleichmäßig, d.h. nicht vibrierend oder pulsierend. Darüber hinaus ist es jedoch häufig zu wünschen, dem Zerspanungswerkzeug zur Fräsbearbeitung auch eine seitliche Vorschubbewegung erteilen zu können. Dazu sind Umfangsschneiden erforderlich. Die Umfangsschneiden kommen jedoch nicht dauernd, sondern intermittierend mit dem Werkstück in Eingriff - der Schnitt ist unterbrochen und entsprechend entstehen vibrierende oder pulsierende an dem Umfangsschneidkanten angreifende Kräfte. Das für solche Bearbeitungen geeignete Werkzeug muss diesen gewachsen sein.

Aus der EP 0 257 372 ist ein spanabhebendes Werkzeug bekannt, das vollständig aus Hartmetall besteht und im Strangpressverfahren geformt ist. Es ist bezüglich einer Drehachse rotationssymmetrisch ausgebildet und weist zwei Stirnschneidkanten und zwei Umfangsschneidkanten auf.

Bei Verschleiß der Schneidkanten muss das Schneidwerkzeug im Ganzen ausgetauscht oder aufgearbeitet werden.

Aus der DE 34 17 168 A1 ist ein Bohrnutenfräser bekannt, dessen Werkzeugkörper sowohl an der Werkzeugkörperstirn als auch an dem Umfang mit Schneidplatten bestückt ist. An der Werkzeugkörperstirn ist eine der beiden hier aktiven Schneidplatten als Lateralplatte angeordnet. Die Schneidkante dieser Schneidplatte erstreckt sich ausgehend vom Drehzentrum radial nach außen, jedoch nicht über den gesamten Radius. Die ergänzende andere an der Werkzeugstirn angeordnete Schneidplatte erstreckt sich mit ihrer Stirnschneidkante von einem äußeren Eckbereich radial nach innen, jedoch weniger weit als die Lateralplatte. Es sind deshalb Radiusbereiche vorhanden, in denen lediglich eine Schneidkante aktiv ist. Dies gilt insbesondere im Außenbereich des Bohrnutenfräsers. Der Axialvorschub des Bohrnutenfräsers ist deshalb durch die Zerspanungsleistung dieser einen Schneidkante begrenzt.

Der Werkzeugkörper dieses bekannten Bohrnutenfräsers weist außerdem Plattensitze für Umfangschneidplatten auf. Diese sind in zwei zueinander versetzten Reihen angeordnet und stehen auf Lücke. Die Schneidkanten der Umfangsschneidplatten der beiden Reihen überdecken sich dabei so, dass Bereiche existieren, in denen zwei Schneidkanten aktiv sind, wohingegen in den Lücken zwischen zwei Umfangschneidplatten einer Reihe jeweils nur ein Schneidkantenabschnitt einer Schneidplatte der anderen Reihe aktiv ist. Damit ist die Vorschubgeschwindigkeit für die seitliche Vorschubbewegung durch die Zerspanungsleistung dieses Schneidkantenbereichs begrenzt.

Aus der DE 196 09 820 A1 ist ein weiterer Bohrnutenfräser bekannt. Sein Werkzeugkörper weist mehrere Spannuten mit Plattensitzen auf. Diese sind so angeordnet, dass die Schneidplatten der einzelnen Reihen unterschiedliche Axialpositionen einnehmen und sich somit mit ihren Umfangsschneidkanten überlappen. An den Ecken, d.h. im Übergang von dem Umfangsschneidkanten zu den Stirnschneidkanten sind zwei Rundplatten eingesetzt. Diese sind in unterschiedlichen Axial- und Radialpositionen angeordnet, so dass eine von ihnen mit ihrer Umfangschneidkante aktiv ist, während die andere mit ihrer Stirnschneidkante aktiv ist. Die Rundplatten begrenzen somit die Zerspanungsleistung sowohl für die Bohrbewegung (Axialvorschub) als auch für die Fräsbewegung (Radialvorschub).

Bei den Bohrwerkzeugen bzw. Bohr-Fräswerkzeugen nach dem vorstehend genannten Stand der Technik ergeben sich begrenzte Zerspanungsleistungen, eventuell unterschiedliche zulässige Vorschubgeschwindigkeiten in der Bohrbewegung und der Fräsbewegung und Radialkräfte beim Bohrerbetrieb. Sind die Werkzeuge hingegen nicht mit Schneidplatten bestückt, sondern vollständig aus Hartmetall ausgebildet, ist eine Wartung bei verschlissenen Schneidkanten unmöglich oder zumindest aufwendig.

Aus der EP 0537476 B1 ist darüber hinaus ein Fräskopf bekannt, der auch zum Bohren eingerichtet ist. Der Fräskopf weist einen länglichen schlanken Werkzeugkörper auf, an dessen Stirn als Schneidplatten zwei Rundplatten angeordnet sind. Die Schneidplatten sind dabei an entsprechenden Sitzen so gehalten, dass sich ihre Schneidkanten an der Drehachse gegenseitig berühren oder dass sich die Schneidplatten überlappen, d.h. mit ihren Spanflächen partiell aneinander anliegen. Die Spanflächen (Vorderseiten) der Schneidplatten liegen somit in einer gemeinsamen Ebene. Um einen ausreichenden Freiwinkel zu erhalten, müssen die Schneidplatten, insbesondere bei Bohr-Fräswerkzeugen, mit geringem Durchmesser stark konisch ausgebildet sein. Dies schwächt die Schneidkanten.

Aus der GB 2 079 656 A ist ein einschneidiges Fräswerkzeug bekannt. Es weist einen Werkzeugkörper mit zwei einander diametral gegenüber liegend angeordneten, sich entlang seiner Mantelfläche erstreckenden Spannuten auf. In diesen sind jeweils zwei Schneidplatten angeordnet, wobei die zwischen den Schneidplatten einer Spannut vorhandene Lücke von einer Schneidplatte der anderen Spannut überdeckt wird. Es handelt sich um einen Fingerfräser, der, wenn es sich dreht, eine radiale Zustellbewegung erfährt. Bohroperationen sind mit diesem Werkzeug nicht möglich.

Die Gebrauchsmusterschrift DE-A-91 14 310 offenbart ebenfalls ein Fräswerkzeug mit zwei in Umfangsrichtung um 180° versetzt zueinander angeordneten Schneidplatten. Zur Aufnahme derselben weist der Werkzeugkörper entsprechende Taschen auf. Das drehende Werkzeug erfährt bei der Zerspanung von Material eine radial gerichtete Zustellbewegung. Die Schneidplatten sind mit einem zentralen Fenster versehen, das der Späneabfuhr dienen soll. Zur Durchführung von Bohroperationen sind solche Werkzeuge nicht geeignet.

Davon ausgehend ist Aufgabe der Erfindung, einen vielseitig verwendbaren Bohrnutenfräser zu schaffen, der bei hoher Zerspanungsleistung eine präzise Werkstückbearbeitung gestattet und der einfach zu warten ist.

Diese Aufgabe wird mit dem Bohrnutenfräser mit den Merkmalen des Anspruchs 1 gelöst. Der erfindungsgemäße Bohrnutenfräser ist mit Schneidplatten bestückt, die lösbar an einem Werkzeugkörper gehalten sind. Als Befestigung kommen geeignete Spannmittel wie Spannpratzen, Spannschrauben, Befestigungsschrauben oder dergleichen in Frage. Insbesondere wird es als vorteilhaft angesehen, wenn die Schneidplatten eine zentrale Befestigungsöffnung aufweisen, die von einer Befestigungsschraube zu durchgreifen ist. Diese presst die Schneidplatte gegen den Plattensitz und ggfs. gegen eine entsprechende seitliche Anlage.

Eine Besonderheit des erfindungsgemäßen Bohrnutenfräsers besteht darin, dass der Werkzeugkörper an seiner Stirn zwei zu der Drehachse symmetrisch angeordnete Plattensitze aufweist, die für im Wesentlichen gleich ausgebildete Schneidplatten vorgesehen sind. Die Schneidplatten weisen jeweils zumindest eine Stirnschneidkante, die im Wesentlichen radial zu der Drehachse orientiert ist, eine Umfangsschneidkante, die im Wesentlichen in Werkzeuglängsrichtung orientiert ist, und eine den Übergang zwischen der Stirnschneidkante und der Umfangschneidkante bildenden Eckenschneidkante auf. Die Stirnschneidkanten der beiden Schneidplatten sind in Axialrichtung nicht gegeneinander versetzt, sondern in gleicher Axialposition angeordnet. Außerdem stimmen die Neigungen der Stirnschneidkanten überein. Dadurch definiert ein festgelegter Punkt einer Stirnschneidkante den gleichen Flugkreis wie der entsprechende bei gleichem Radius festgelegte Punkt der anderen Stirnschneidkante. Mit anderen Worten, beide Stirnschneidkanten liegen auf einer gemeinsamen Fläche. Die Stirnschneidkanten sind im Wesentlichen gerade ausgebildet, d.h. sie können etwas gekrümmt sein, sofern der Krümmungsradius den halten Plattendurchmesser übersteigt. Auch kann die Stirnschneidkante in mehrere Abschnitte unterteilt sein, die miteinander einen stumpfen Winkel einschließen. Außerdem kann die Stirnschneidkante ein oder mehrere Stufen aufweisen.

Die Schneidplatten sind so angeordnet, dass ihre Vorderseiten (Oberseite), d.h. diejenige Fläche, deren Flächennormale in Umfangsrichtung weist, gegeneinander versetzt sind. Damit liegen die Vorderseiten der Schneidplatten jeweils in verschiedenen Ebenen, die parallel zueinander sind und nicht durch die Drehachse gehen. Bezüglich der Drehbewegung des Zerspanungswerkzeugs eilt die jeweilige Ebene, in der die Vorderseite der betreffenden Schneidplatte liegt, einer Radialebene voraus, zu der sie parallel ist und die durch die Drehachse führt. Durch die so erreichte Voreilung der Umfangsschneidkanten ergibt sich an der Umfangsschneidkante ein Freiwinkel, ohne dass die betreffende Schneidplatte eine besondere Konizität aufweisen müsste. Die Schneidplatten können so an ihren Umfangsschneidkanten als Keilwinkel, einen rechten Winkel oder nur geringfügig spitzeren Winkel aufweisen. Dies sichert die Stabilität der Schneidkante und ermöglicht insbesondere hohe Zerspanungsleistung.

Darüber hinaus gestattet diese Anordnung die Abstützung der Schneidplatten nach innen hin an einem schmalen und somit steifen Steg oder auch die direkte Anlage der Schneidplatten mit ihren Seitenflächen aneinander. Diese Art der Abstützung gestattet die Übertragung von Radialkräften, die beim Fräsen auftreten. Der genannte Versatz der Oberseiten der Schneidplatten gegeneinander schafft somit die Grundlage für eine verbesserte Seitenabstützung der Schneidplatten. Die bessere Abstützung der Schneidplatten kann wiederum zu höheren Zerspanungsleistungen genutzt werden.

Gleiches gilt letztendlich für die Eckenschneidkanten und die Umfangschneidkanten. Dadurch sind sowohl beim Bohrbetrieb (Axialvorschub) als auch beim Fräsbetrieb (Radialvorschub) jeweils zwei Schneidkanten aktiv. Die Zerspanungsleistung ist somit gegenüber einem Werkzeug mit lediglich einer Schneidplatte verdoppelt und es können beim Bohren und beim Fräsen gleiche Vorschubgeschwindigkeiten gefahren werden. Dies vereinfacht die Maschinenprogrammierung erheblich, denn die Gefahr der Überlastung des Werkzeugs durch fälschlich zu hoch gewählte Vorschubgeschwindigkeit oder unakzeptabel hohe Bearbeitungszeiten durch sicherheitshalber zu niedrig eingestellter Vorschubgeschwindigkeiten können vermieden werden.

Die Schneidplatten sind an dem Werkzeugkörper bezüglich der Drehachse vorzugsweise um 180° versetzt und somit symmetrisch zu der Drehachse angeordnet. Dadurch heben sich die von beiden Schneidplatten beim Bohrbetrieb erzeugten Kräfte gegenseitig im Wesentlichen auf, so dass keine nennenswerte Radialkräfte entstehen. Dies gestattet eine hohe Präzision bei Bearbeitungsvorgängen insbesondere beim Bohren.

Prinzipiell können Stirnschneidkanten, Eckenschneidkanten und Umfangschneidkanten der beiden Schneidplatten voneinander abweichende Längen aufweisen. Dies insbesondere, wenn dafür Sorge getragen wird, dass Schneidkantenabschnitte, bei denen keine vollständige Überdeckung der beiden Schneidplatten sichergestellt ist, keine Zerspanungsaufgabe übernehmen oder durch andere Schneidplatten unterstützt werden. Es wird jedoch bevorzugt, Stirnschneidkanten, Eckenschneidkanten und Umfangsschneidkanten jeweils gleich lang und in gleicher Form auszubilden. Damit können die beiden an der Stirnseite des Werkzeugkörpers angeordneten Schneidplatten untereinander gleich ausgebildet werden, was den Wartungsaufwand und den Herstellungsaufwand senkt.

Die Stirnschneidkanten und die Umfangsschneidkanten sind im Wesentlichen gerade ausgebildet. Dagegen ist die Eckenschneidkante, je nach Erfordernis, vorzugsweise mehr oder weniger bogenförmig gekrümmt ausgebildet. Beide Stirnschneidkanten erstrecken sich ausgehend von der Eckenschneidkante gleich weit nach innen an das die Drehachse umgebende Drehzentrum heran. Das von den Schneidkanten nicht erfasste Drehzentrum bildet beim Bohren einen nicht spanend bearbeiteten Bereich, in dem an dem Werkzeug zunächst ein kleiner Zapfen stehen bleiben kann. Dieser wird bei einer nachfolgenden Seitwärtsbewegung des Bohrwerkzeugs (Fräsen) spanend beseitigt oder im Ganzen abgebrochen.

Die Stirnschneidkanten sind vorzugsweise nach innen geneigt, d.h. ihr drehachsennahes Ende ist in Richtung auf den Schaft des Werkzeugkörpers hin gegen die Eckenschneidkante versetzt. Mit anderen Worten, die den Eckenschneidkanten benachbarten Abschnitte der Stirnschneidkanten stehen axial am weitesten vor. Dadurch wird die Bearbeitung von Planflächen bei seitlichem Vorschub (Fräsen) ermöglicht und das Bohrwerkzeug kann zugleich als Nutenfräser (Bohrnutenfräser) eingesetzt werden. Die beiden Stirnschneidkanten legen somit einen Kegelstumpf fest, der ein Kegelwinkel vorzugsweise größer als 170° ist. Die Umfangsschneiden sind hingegen vorzugsweise auf einer Zylinderfläche angeordnet. Sind die Umfangsschneidkanten parallel zur Drehachse ausgerichtet, können die Umfangsschneidkanten vollkommen gerade ausgebildet sein. Werden die Schneidplatten hingegen mit einem Axialwinkel in den Werkzeugkörper eingebaut oder ist an den Schneidplatten ein Axialspanwinkel vorgesehen (etwa weil die Schneidplatten keilförmig ausgebildet sind) sind die Umfangsschneidkanten so gekrümmt, dass sie auf der Mantelfläche eines gedachten Zylinders liegen. Die Schneidkanten können bedarfsweise schraubenförmig, ellipsenbogenförmig sein oder einer anderweitigen auf dem gedachten Zylindermantel liegenden Kurve folgen.

Die Stirnschneidkante geht an ihrer der Drehachse zugewandten Seite vorzugsweise in einen Abschnitt über, der gegen die übrige Stirnschneidkante geneigt ist und hier als Innenschneidkante bezeichnet wird. Die Stirnschneidkanten sind jeweils vor einem zu ihnen parallelen Radius angeordnet. Dies ermöglicht eine hohe Schneidplattenstabilität der Schneidplatten im Bereich der Umfangsschneidkanten. Die Innenschneidkanten führen dann in der Umgebung der Drehachse (Drehzentrumsbereich) hinter diese Radiale, was auch hier noch eine Zerspanungsarbeit ermöglicht. Etwaige stehen bleibende Zapfen sind deshalb schlank und behindern den Bohrvorschub nicht.

Die beiden Schneidplatten des Zerspanungswerkzeugs können zur radialen Anlage und somit zur Abstützung der beim Fräsen auftretenden Kräfte an einem die Drehachse enthaltend angeordneten Stegbereich des Werkzeugkörpers Anlage finden, der zum Beispiel als Keil ausgebildet ist und zum stirnseitigen Ende des Werkzeugkörpers hin schmal ausläuft. Dies ermöglicht die Heranführung der Stirnschneidkanten unmittelbar bis an die Drehachse und somit die Minimierung des von dem Zerspanungsvorgang nicht erfassten Drehzentrums auf einen sehr kleinen Bereich. Bedarfsweise können die Plattensitze auch nach innen hin offen ausgebildet sein, d.h. die Schneidplatten finden an den Plattensitzen keine radiale, seitliche Anlagefläche vor. Dabei ist es möglich, dass die Schneidplatten an der Drehachse aneinander stoßen und miteinander einen geringen Spalt festlegen oder aneinander angepresst sind. Dabei sind die Innenschneidkanten, d.h. die Abschnitte der Stirnschneidkanten, die sich in das Drehzentrum hinein erstrecken, vorzugsweise zu dem Plattensitz hin abgeschrägt, so dass diese Schneidkantenabschnitte nicht vor, sondern hinter dem Drehzentrum laufen. Damit wird verhindert, dass Schneidkantenabschnitte gegen ihre Orientierung bewegt werden.

Es ist möglich, an der Stirnseite des Werkzeugskörpers mehr als zwei Schneidplatten vorzusehen. Auch hier ist es wiederum möglich, die Schneidplatten unmittelbar aneinander anstoßen zu lassen, um eine lückenlose Schneidkante zu bilden. Dies erhöht die Zerspanungsleistung und ermöglicht einfache Plattensitze.

Zur Abstützung der Schneidplatten kann in Seitenrichtung (radial) eine Längsstufe dienen, in Axialrichtung kann eine Querstufe vorgesehen sein. Zusätzlich kann jeweils eine Passschraube vorgesehen sein, die die Abstützung in einer Richtung übernimmt.

Das Zerspanungswerkzeug ist vorzugsweise ein Bohrnutenfräser, der sowohl zum Bohren als auch zum Fräsen Anwendung finden kann. Durch die vollständige Bestückung der Stirnseite des Bohrwerkzeugs mit Schneidplatten ist ein axialer Einstich in das Werkzeug möglich.

Weitere Einzelheiten vorteilhafter Ausgestaltungen der Erfindung lassen sich der Zeichnung, der Beschreibung oder Unteransprüchen entnehmen.

In der Zeichnung sind Ausführungsbeispiele der Erfindung veranschaulicht. Es zeigen:
- Fig. 1: einen erfindungsgemäßen Bohrnutenfräser in perspektivischer Darstellung;
- Fig. 2: den Bohrnutenfräser nach Fig. 1 in einer anderen perspektivischen Darstellung;
- Fig. 3: den Bohrnutenfräser nach den Figuren 1 und 2 in einer schematisierten Seitenansicht;
- Fig. 4: eine andere Ausführungsform eines erfindungsgemäßen Bohrnutenfräsers in perspektivischer Darstellung;
- Fig. 5: den Bohrnutenfräser nach Fig. 4 in einer anderen perspektivischen Darstellung;
- Fig. 6: den Bohrnutenfräser nach den Figuren 4 und 5 in einer weiteren Perspektivdarstellung;
- Fig. 7: eine weiter abgewandelte Ausführungsform des erfindungsgemäßen Bohrnutenfräsers in perspektivischer Darstellung mit Blick auf die Bohrerstirnseite;
- Fig. 8: eine weitere Ausführungsform des erfindungsgemäßen Bohrnutenfräsers in perspektivischer Darstellung mit Blick auf einen Spanraum;
- Fig. 9: den Bohrnutenfräser nach Fig. 8 in schematisierter Darstellung,
- Fig. 10: den Bohrnutenfräser nach Fig. 9 in einer schematisierten Stirnansicht, und
- Fig. 11: den Bohrnutenfräser nach Fig. 10 in einer vergrößerten Stirnansicht.

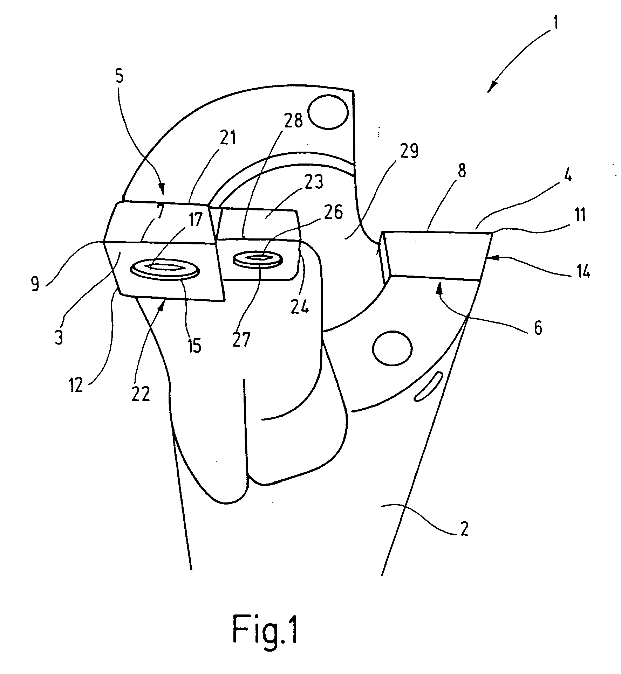

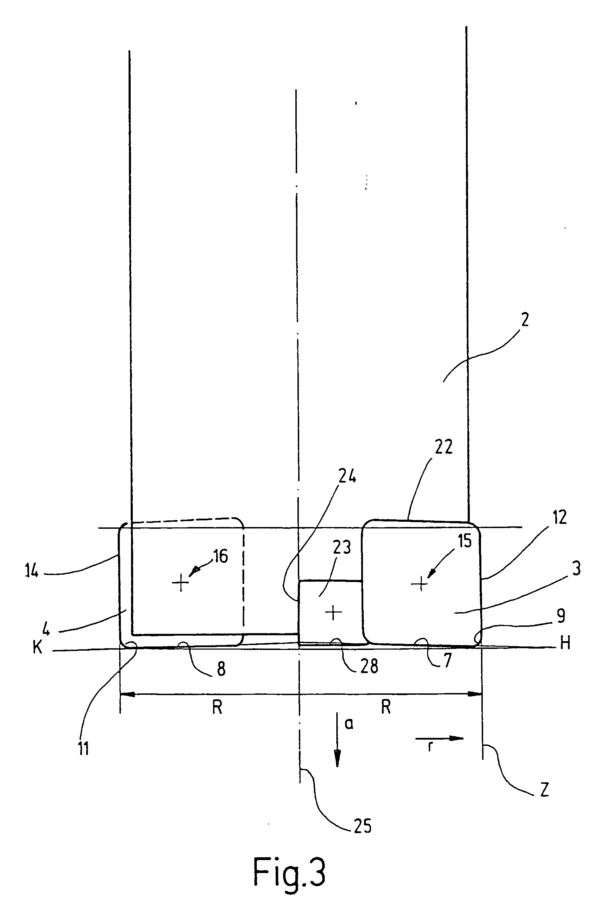

In Figur 1 ist ein Bohrnutenfräser 1 veranschaulicht, der einen Werkzeugkörper 2 und zwei eckständige Schneidplatten 3, 4 aufweist, die an entsprechenden Plattensitzen 5, 6 des Werkzeugkörpers 2 angeordnet sind. Die Schneidplatten 3, 4 sind als Wendeschneidplatten ausgebildet und weisen jeweils eine Stirnschneidkante 7, 8, eine Eckschneidkante 9, 11 und eine Umfangsschneidkante 12, 14 auf. Die Schneidplatten 3, 4 sind Rechteckplatten mit einer zentralen Befestigungsöffnung 15, 16, die in Fig. 3 lediglich durch ihr jeweiliges Zentrum symbolisiert ist und an ihren Oberseiten 3a, 4a mündet. In der Befestigungsöffnung 15, 16 sitzt eine Befestigungsschraube 17, die die Schneidplatte 3, 4 an die hier plan ausgebildete Anlagefläche des Plattensitzes 5, 6 anpresst.

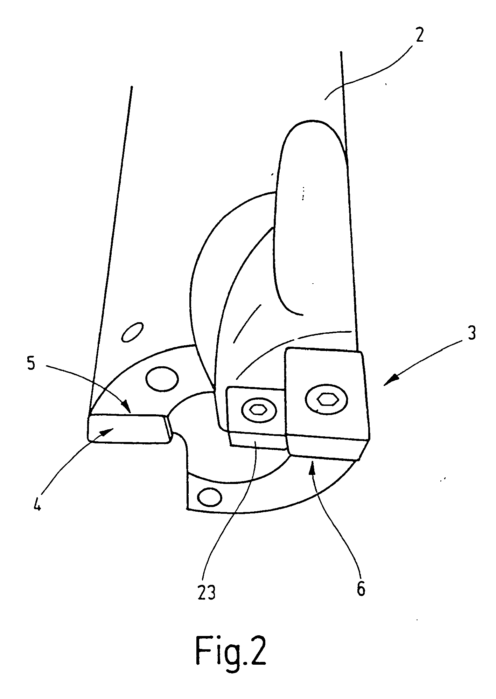

Die Schneidplatten 3, 4 sind untereinander gleich ausgebildet. Sie können bedarfsweise gegeneinander ausgetauscht werden. Die Plattensitze 5, 6 sind jedoch etwas unterschiedlich gestaltet. Wie Figur 1 und 2 veranschaulichen, ist der Plattensitz 5 der Schneidplatte 3 lediglich durch eine plane Auflagefläche 21, deren Flächennormale in Umfangsrichtung orientiert ist und die von einer Gewindebohrung für die Befestigungsschraube 17 durchgriffen ist, sowie eine axiale Anlagefläche 22 begrenzt. Radial nach innen findet die Schneidplatte 3 Abstützung an einer weiteren Schneidplatte 23, die ihrerseits ihre Radialanlage an einer Seitenanlagefläche 24 findet. Diese ist auf oder nahe an einer durch den Werkzeugkörper 2 definierten Drehachse 25 angeordnet, um die der Bohrnutenfräser 1 in Betrieb dreht.

Die Schneidplatte 23 ist eine Rechteckplatte mit zentraler Befestigungsöffnung 26, in der eine Befestigungsschraube 27 sitzt. Die Schneidplatte 23 ist als Wendeschneidplatte ausgebildet und erstreckt sich, wie Figur 3 veranschaulicht, mit ihrer Stirnschneidkante 28 von der Drehachse 25 bis zu der innenliegenden Seitenfläche (Freifläche) der Schneidplatte 3. Damit hintergreift die Stirnschneidkante 28 die Schneidkante 7 der äußeren Schneidplatte 3. Dadurch ist eine erste vollständige Schneidkante gebildet, die sich von der Drehachse 25 bis zu der Eckenschneidkante 9 erstreckt. Im Bereich der Stirnschneidkante 7 ist die Schneidenzahl z = 2. Die Schneidkante 7 liegt auf einem gemeinsamen flachen Kegel mit der Schneidkante 8, dessen Spitze auf der Drehachse 25 liegt. Der Öffnungswinkel dieses Kegels ist nahezu 180°. In Figur 3 weist seine Spitze nach oben, d.h. die Eckenschneidkanten 9, 11 stehen weiter von dem Werkzeugkörper 2 weg als drehachsennahe Abschnitte der Schneidkanten 7, 8, die sowohl in Radialrichtung als auch in Axialrichtung gleich positioniert sind.

Dies gilt auch für die Eckenschneidkanten 9, 11, die die gleiche Umlauffigur definieren und auf gleicher Höhe H liegen. Die Höhe H legt die Axialposition fest.

Auch die Umfangsschneidkanten 12, 14 sind gleich positioniert - sie liegen auf dem Mantel eines gedachten Zylinders Z und sind jeweils mit dem gleichen Radius R zu der Drehachse 25 eingestellt. Der Bohrnutenfräser 1 weist somit sowohl an seinem Umfang (Umfangsschneidkanten 12, 14) als auch an seinen Eckschneiden (Eckschneidkanten 9, 11) als auch an seiner Stirn (Stirnschneidkanten 7, 8) zwei vollständige Schneiden auf. Die Zähnezahl z beträgt somit im Bereich der eckständigen Schneidplatten 3, 4 durchgehend z = 2.

Der insoweit beschriebene Bohrnutenfräser 1 arbeitet wie folgt:
Zur spanenden Bearbeitung eines Werkstücks wird der Bohrnutenfräser 1 an einer Arbeitsspindel einer Bearbeitungsmaschine gespannt und drehfest mit dieser verbunden. Der Bohrnutenfräser 1 wird von der Arbeitsspindel um die Drehachse 25 mit geeigneter Drehzahl gedreht. Zusätzlich wird der Bohrnutenfräser 1 und/oder dem Werkstück eine Zustellbewegung erteilt, die parallel oder rechtwinklig zu der Drehachse 25 gerichtet sein kann. Es kann auch eine überlagerte Zustellbewegung durchgeführt werden, bei der die resultierende Relativbewegung zwischen dem Werkstück und dem Bohrnutenfräser 1 sowohl eine Komponente in Richtung der Drehachse 25 als auch eine Komponente quer zu dieser aufweist.

Weist die Zustellbewegung lediglich eine Komponente in Richtung der Drehachse 25 auf, führt der Bohrnutenfräser 1 einen Bohrvorgang durch. Dabei kommen die Stirnschneidkanten 7, 8 und die Eckschneidkanten 9, 11 mit dem Werkstück in Eingriff und heben beide jeweils einen gleich dicken Span ab. Die daraus resultierenden an den Schneidplatten 3, 4 angreifenden Reaktionskräfte sind entgegengesetzt gerichtet und addieren sich zu einem Drehmoment. Seitliche den Werkzeugkörper 2 seitlich auslenkende Kräfte resultieren daraus nicht. Lediglich die in der Nähe der Drehachse 25 angeordnete vergleichsweise kleinere Schneidplatte 23, die mit ihrer der Drehachse 25 zugewandten Ecke das Drehzentrum des Zerspanungswerkzeugs 2 markiert, ist asymmetrisch zu der Drehachse 25 angeordnet und kann somit eine nicht kompensierte, seitlich wirkende Kraft erzeugen. Die Schneidkante 28 ist kürzer als die Schneidkante 7 oder 8, so dass diese Kraft relativ klein ist. Aufgrund des im Drehzentrum geringeren Zerspanungsvolumens kann in diesem Bereich bei dem vorgesehenen Vorschub eine einzige Schneidplatte genügen.

Soll an dem Werkstück seitlich zu dem während des Bohrvorgangs ausgearbeiteten Loch ein weiterer Zerspanungsvorgang stattfinden, erhält die Zustellbewegung eine seitlich zu der Drehachse gerichtete Komponente oder die Zustellbewegung ist vollständig eine Querbewegung. Es sind nun die Umfangsschneidkanten 12, 14 jeweils abwechselnd aktiv (Beim Bohren waren die Stirnschneidkanten 7, 8 gleichzeitig aktiv). Dadurch wird das Antriebsdrehmoment jeweils auf eine der beiden Schneidplatten 3, 4 konzentriert. Dennoch zählen zur Bemessung der Vorschubgeschwindigkeit beide Umfangschneidkanten 12, 14, so dass mit der gleichen Vorschubgeschwindigkeit gearbeitet werden kann wie beim Bohren. Die pulsierenden an den Umfangsschneidkanten 12, 14 abwechselnd angreifende Kräfte werden von dem Werkzeugkörper 2 aufgenommen. Dabei führt dessen Elastizität zu einer gewissen federnden Verformung oder Verlagerung des betreffenden Plattensitzes 5, 6. Die beiden Schneidplatten 3, 4 können sich somit im Rahmen der Werkzeugkörperelastizität gegeneinander bewegen. Anders als bei durchgehenden, d.h. die Drehachse 25 durchquerenden Hartmetalleinsätzen von Bohrern, kann somit unabhängig von einer möglicherweise vorhandenen größeren Sprödigkeit des harten Schneidplattenmaterials zuverlässiger Betrieb auch unter schweren Bedingungen erreicht werden. Dies obwohl der Werkzeugkörper 2 in Bereichen seiner Stirn, d.h. der Plattensitze 5, 6 durch die wenigstens zwei vorhandenen Plattensitze sehr weit geschwächt ist und lediglich ein schmaler Steg 29, die jeweils hinter den Plattensitzen 5, 6 ausgebildeten Stollen des Werkzeugkörpers 2 miteinander verbindet. Die Wendeschneidplatten bestehen vorzugsweise aus Hartmetall (Wolframcarbid mit etwas Kobalt und gegebenenfalls einer geeigneten Beschichtung wie bspw. AL₂O₃).

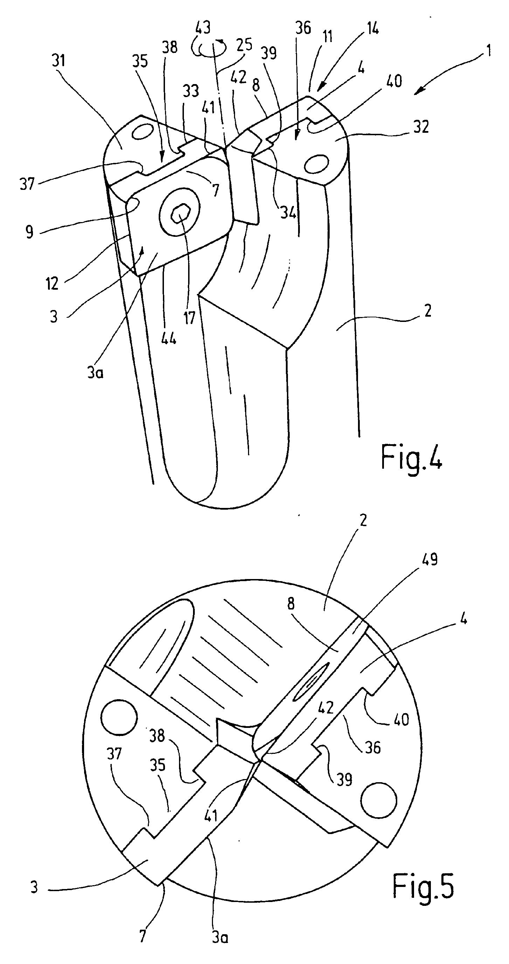

In Fig. 4, 5 und 6 ist eine abgewandelte Ausführungsform der Erfindung veranschaulicht. Das in diesen Figuren veranschaulichte Zerspanungswerkzeug 1 stimmt in einigen wesentlichen Merkmalen mit dem vorbeschriebenen Zerspanungswerkzeug gemäß Figur 1 bis 3 überein und insoweit wird auf die vorstehende Beschreibung unter Zugrundelegung gleicher Bezugszeichen verwiesen.

Im Unterschied zu dem vorbeschriebenen Zerspanungswerkzeug 1 weist es jedoch zwei Schneidplatten 3, 4 auf, die sich bei der Drehachse 25 treffen. Dazu sind an dem Werkzeugkörper 2 zwei Stollen 31, 32 ausgebildet, die sich wie freistehende Zinnen oder Finger parallel zu der Drehachse 25 im Abstand zueinander erstrecken. In Umfangsrichtung messen sie etwa 90°. Jeder Stollen 31, 32 bildet einen Plattensitz, dessen Anlagefläche 33, 34 einen zentralen, leistenartigen Vorsprung 35, 36 aufweist. Dieser ragt aus der ansonsten planen Anlagefläche 33, 34. Der Vorsprung 35, 36 weist jeweils zwei etwa parallel zu der Drehachse orientierte Flanken 37, 38, 39, 40 auf, die die radiale Orientierung und Positionierung der Schneidplatte 3, 4 festlegen.

Die Vorsprünge 35, 36 sind von Gewindeöffnungen durchgriffen, in denen die entsprechenden Befestigungsschrauben 17 sitzen. Die Schneidplatten 3, 4 sind wie bei dem vorstehenden Ausführungsbeispiel identisch positioniert, d.h. die Umfangsschneidkanten 12, 14, die gerundeten oder geraden Eckenschneidkanten 9, 11 und die Stirnschneidkanten 7, 8 sind identisch, jedoch bezüglich der Drehachse 25 um vorzugsweise 180° gegeneinander in Umfangsrichtung versetzt, damit beträgt die Schneidenzahl z = 2.

Die Stirnschneidkanten 7, 8 erstrecken sich ausgehend von der Eckschneidkante 9, 11 in Richtung auf das Drehzentrum, das die Drehachse 25 umgibt. Im Bereich des Drehzentrums 25 gehen die Stirnschneidkanten 7, 8 in Innenschneidkanten 41, 42 über, wie insbesondere auch aus Figur 5 hervorgeht. Die Innenschneidkanten 41, 42 sind stärker nach innen zu geneigt als die Stirnschneidkanten 7, 8 und so angeordnet, dass sie bezüglich der vorgesehenen Drehrichtung des Bohrnutenfräsers 1 (siehe Drehrichtungspfeil 43 in Figur 4) hinter der Drehachse 25 laufen. Auch im Drehzentrumsbereich ist somit die Schneidenzahl z = 2. Ein geringer zwischen den Schneidkanten 41, 42 bleibender Zapfen, der beim bohrenden Zerspanen eines Werkstücks zunächst nicht zerspant wird, wird von den Schneidplatten 3, 4 bei der Bohrbewegung dank des Axialvorschubs seitlich weggedrückt ohne den Axialvorschub zu behindern. Der maximale Durchmesser des Drehzentrums ist damit durch den maximal zulässigen Durchmesser des Zapfens begrenzt.

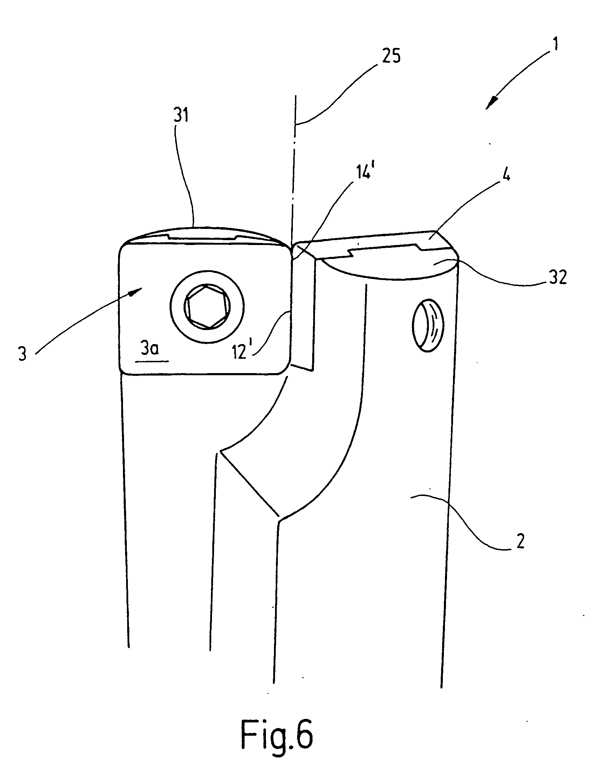

Die axiale Sicherung der Schneidplatten 3, 4 an dem Werkzeugkörper 2 übernehmen Axialanlageflächen 44, 45, die an den betreffenden Plattensitzen ausgebildet sind. Wie insbesondere Figur 6 veranschaulicht, berühren die Schneidplatten 3, 4 einander im Zentrumsbereich, d.h. bei der Drehachse 25. Die innenliegenden Schneidkanten, die bei Ausbildung der Schneidplatten 3, 4 als Wendeschneidplatten dann den Umfangsschneidkanten 12, 14 entsprechen und in Figur 6 mit 12', 14' bezeichnet sind, liegen dann jeweils an der Freifläche der benachbarten Schneidplatte 3,4 an. Durch diese linien- oder streifenförmige Anlage der Schneidplatten 3, 4 aneinander, die auch aus Figur 5 ersichtlich ist, findet beim Fräsvorgang eine seitliche Druckübertragung einer Schneidplatte 3, 4 auf die jeweils andere Schneidplatte 4, 3 statt, so dass die Seitenstabilität nicht allein von dem Stollen 31, 32 aufgebracht werden muss. Die linien- oder streifenförmige Anlage der Schneidplatten 3, 4 aneinander gestattet jedoch eine Mikrobewegung, insbesondere eine Mikroschwenkbewegung der Schneidplatten 3, 4 gegeneinander, was die hohe Belastbarkeit des Bohrnutenfräsers 1 insbesondere beim Fräsen sicherstellt.

Alternativ kann zwischen den Schneidplatten 3, 4 ein enger Spalt eingehalten sein, so dass die Schneidplatten 3, 4 untereinander keine Berührung haben. Die Abstützung der Schneidplatten 3, 4 erfolgt dann allein über die Stollen 31, 32, was insbesondere bei leichteren Zerspanungsaufgaben vorteilhaft sein kann.

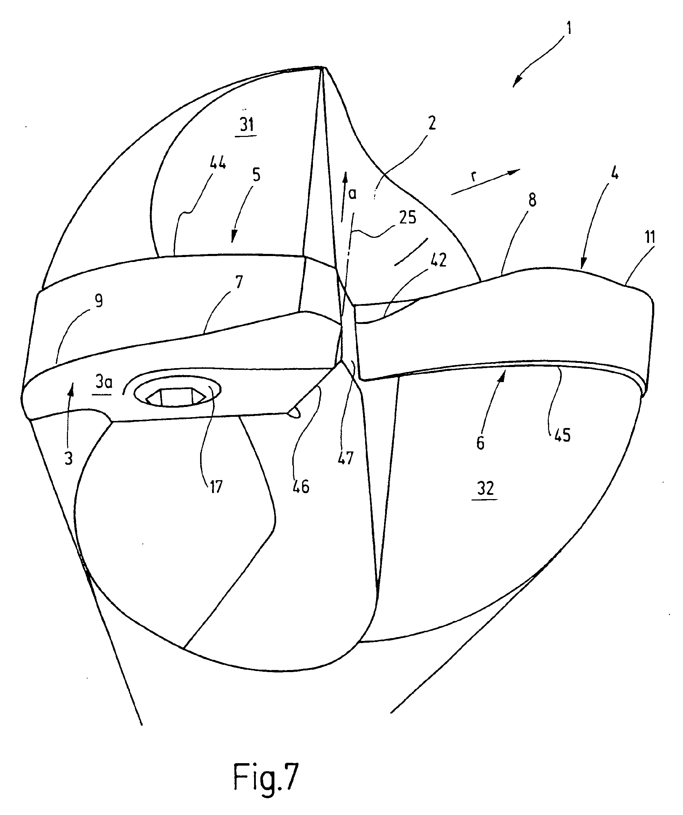

Eine weitere Ausführungsform der Erfindung ist in Figur 7 veranschaulicht. Diese unterscheidet sich von dem vorbeschriebenen Ausführungsformen durch die Ausbildung der Plattensitze 5, 6 an dem Werkzeugkörper 2. Zu den Plattensitzen 5, 6 gehört jeweils eine als Auflagefläche dienende Planfläche 44, 45 deren Flächennormale etwa in Umfangsrichtung orientiert ist. Radial innen, d.h. bei der Drehachse 25, schließt sich an die Planfläche 44, 45 eine Innenanlagefläche 46, 47 an. Die Innenanlageflächen 46, 47 sind in spitzem Winkel zueinander ausgerichtet und definieren somit einen an dem Werkzeugkörper 2 symmetrisch zu der Drehachse 25 angeordneten sich zur Werkzeugstirn verjüngenden Keil, der letztendlich die beiden Stollen 31, 32 des Werkzeugkörpers miteinander verbindet. Der Keil bildet somit einen Steg entsprechend dem Steg 29 in Figur 1, jedoch mit spitz zulaufendem stirnseitigen Ende, das auf der Drehachse 25 liegt. Entsprechend sind die Schneidplatten 3, 4 untereinander gleich und so ausgebildet, dass sie mit einer Seitenanlagefläche an den Flächen 46, 47 radial Anlage finden. Die Befestigungsschrauben 17 dienen dazu, die Schneidplatten 3, 4 gegen ihre Auflagefläche 44, 45 und gegen die Innenanlageflächen 46, 47 zu drücken. Zur Abstützung der Schneidplatten 3, 4 in Axialrichtung können ebenfalls entsprechende Anlageflächen vorgesehen sein, so dass hier der Plattensitz insgesamt drei Anlageflächen aufweist. Sowohl der Werkzeugkörper 2 als auch die Plattensitze 5, 6 sind symmetrisch zu der Drehachse 25 ausgebildet. Die Schneidplatten 3, 4 können, wie in Figur 7 veranschaulicht, mit großen Radius gerundete Eckenschneiden 9, 11 oder auch mit geringem Radius verrundete Eckenschneiden 9, 11 aufweisen wie es in Figur 1 zugrundegelegt ist. Die Stirnschneidkanten 7, 8 erstrecken sich bis in die Nähe eines Drehzentrums, das durch Innenschneidkantenabschnitte 41, 42 markiert ist. Diese Innenschneidkantenabschnitte 41, 42 erstrecken sich bis zu der Drehachse 25 oder hinterkreuzen diese.

Dieser Bohrnutenfräser 1 ist auf der gesamten Länge seiner Schneidkanten zweischneidig oder zweizahnig und gestattet somit eine hohe Zerspanungsleistung sowohl in Axialvorschubrichtung a als auch in Radialvorschubrichtung r. In beiden Richtungen a, r können die gleichen Vorschubgeschwindigkeiten gefahren werden. Aufgrund der symmetrischen Ausbildung des Werkzeugkörpers 2 und der symmetrischen Anordnung sowie identischen Ausbildung der Schneidplatten 3, 4 ist das Werkzeug bei Bohrbetrieb radialkraftfrei. Bei Fräsbetrieb kann jede Schneidplatte 3, 4 die auf sie einwirkenden Kräfte über ihren eigenen Plattensitz 5, 6 auf den Werkzeugkörper 2 übertragen, ohne dabei Kräfte in die andere Schneidplatte 4, 3 einzuleiten.

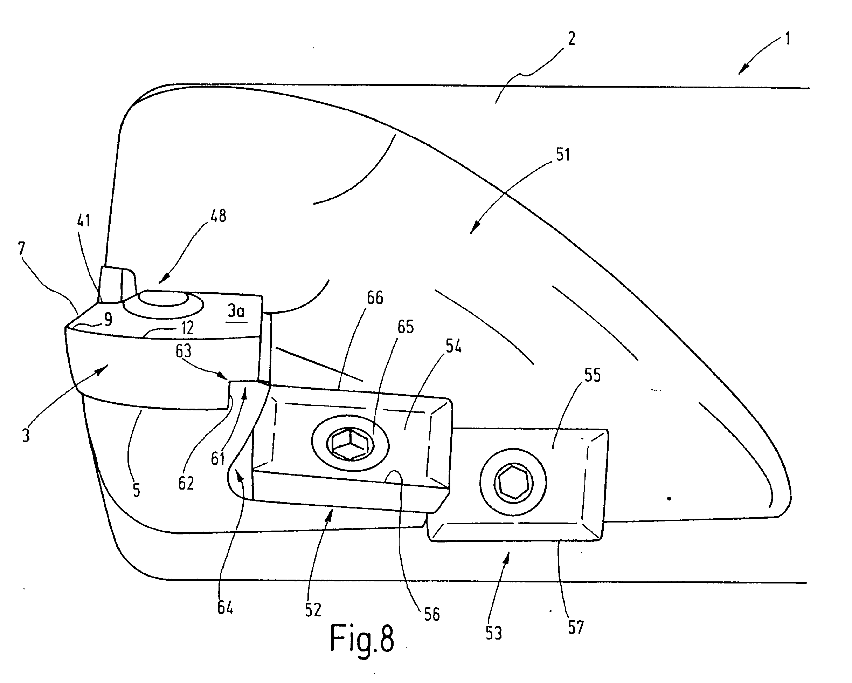

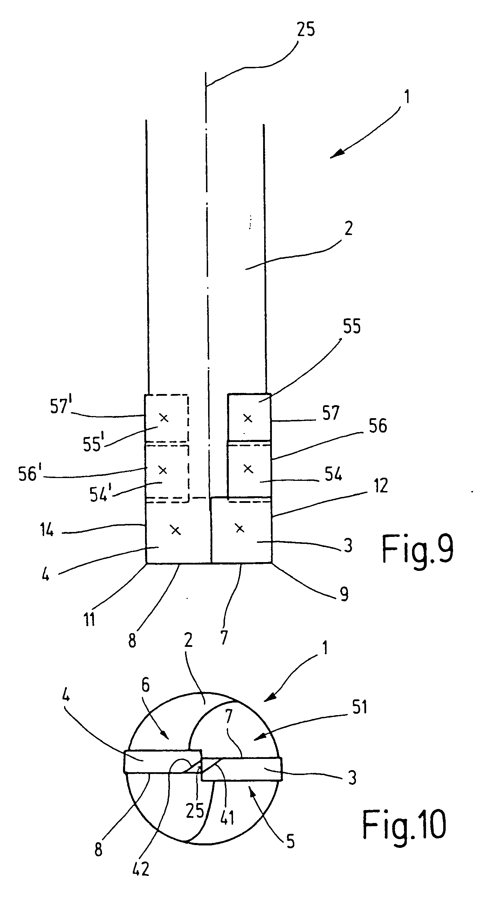

In Figur 8 ist ein weiteres Ausführungsbeispiel des erfindungsgemäßen Bohrnutenfräsers 1 veranschaulicht. Der Werkzeugkörper 2 weist an seiner Stirn zwei Plattensitze 5, 6 (Figur 10) für die Schneidplatten 3, 4 auf. Zwischen den Plattensitzen 5, 6 ist ein schmaler Steg 48 ausgebildet, an dem seitliche Innenanlageflächen 46, 47 ausgebildet sind, wie sie aus Figur 7 ersichtlich sind. Hinsichtlich der Anordnung der Schneidkanten 7, 9, 12, 41, sowie der entsprechenden Schneidkanten der Schneidplatte 4 gelten die in Bezug auf Figur 7 getroffenen Ausführungen.

Während der Bohrnutenfräser 1 nach Figur 7 jedoch lediglich zwei Schneidplatten 3, 4 aufweist, ist das Schneidwerkzeug nach Figur 8 als Bohrnutenfräser für tiefere Nuten vorgesehen. Im Anschluss an den Lagersitz 5, der in einem Spanraum 51 angeordnet ist, sind weitere Lagersitze 52, 53 angeordnet, an denen weitere Schneidplatten 54, 55 platziert sind. Die Schneidplatten 54, 55 sind Wendeschneidplatten vorzugsweise rechteckiger, rhombischer oder parallelogrammförmiger Grundgestalt. Auch können Quadratplatten Anwendung finden.

Die Schneidplatten 54, 55 weisen Umfangsschneidkanten 56, 57 auf, die einander bezüglich der Drehrichtung überlappen. Außerdem überlappt die Umfangsschneidkante 12 die Umfangsschneidkante 56. Dies ist in Figur 9 schematisch veranschaulicht. An die Schneidplatte 4 schließen sich, wie auch an die Schneidplatte 3, entsprechende weitere Schneidplatten an, die in Figur 9 mit 54' und 55' bezeichnet sind. Der Bohrnutenfräser 1 nach den Figuren 8 bis 10 ist somit echt zweischneidig. Ausgehend von der Drehachse 25 erstreckt sich eine erste vollständige Schneidkante zunächst in Radius- und dann in Axialrichtung, wobei diese Schneidkante durch die Schneidkanten 7, 9, 12, 56 und 57 gebildet ist. In Gegenrichtung erstreckt sich eine weitere vollständige Schneidkante zunächst in Radiusrichtung und dann in Axialrichtung, die durch die Schneidkanten 8, 11, 14, 56' und 57' gebildet ist. Dazu hintergreifen die Plattensitze 5, 52 und 53 einander wie insbesondere aus Figur 8 hervorgeht. Zur axialen Sicherung der Schneidplatte 3 weist diese an geeigneter Stelle, bspw. an ihrem axial hinteren Ende eine Querstufe 61 auf, die eine in Axialrichtung zur Werkzeugkörperstirn hin weisende Flanke 62 aufweist. Dieser Querstufe 61 ist eine einspringende Stufe 63 (Ausnehmung) zugeordnet, die in der Schneidplatte 3 ausgebildet ist.

Die Querstufe 61 ist von einer Ausnehmung 64 hintergriffen, die sich an den Plattensitz 52 anschließt. Dies gestattet eine Positionierung der Schneidplatte 54, so dass diese in die Ausnehmung 64 und somit unter die Querstufe 61 und damit unter die Schneidplatte 3 greift. In Axialrichtung ist die Schneidplatte 54 durch eine Befestigungsöffnung durchgreifende Passschraube 6 gesichert. Sonstige Anlageflächen sind für die Axialrichtung nicht vorhanden.

In Radialrichtung liegt die Schneidplatte 54 an einer dem Plattensitz 52 benachbarte Seitenanlagefläche 66 an. Diese übernimmt die radiale Abstützung für den Fräsbetrieb, denn nur bei diesem ist die Schneidplatte 54 aktiv.

Entsprechend ist der Plattensitz ausgebildet, der wiederum den Plattensitz 52 hintergreift. Dadurch ergibt sich eine Überdeckung der Schneidplatten 3, 54, 55 wie aus der schematischen Darstellung gemäß Figur 9 hervorgeht.

Figur 10 veranschaulicht die Gestaltung des Bohrfräswerkzeugs 1 insbesondere im Stirnbereich. Insbesondere ist ersichtlich wie die stirnseitigen Innenschneidkanten 41, 42 die Drehachse 25 hintergreifen, so dass bis an die Drehachse 25 heran eine vollständige Schneide ausgebildet ist. Ein sich um die Drehachse 25 herum ausbildender kleiner Zapfen im Bohrbetrieb wird durch die sich an die Innenschneidkanten 41, 42 anschließenden Schrägflächen der Schneidplatten 3, 4 seitlich wegegedrückt und stört somit den Bohrbetrieb nicht. Außerdem ist die Stirnseite des Zerspanungswerkzeugs so weit symmetrisch ausgebildet, dass keine radiale Kräfte entstehen. Bei den vorgestellten Ausführungsformen sind jeweils zwei vollständige Schneiden vorhanden (z=2) und die entsprechenden Schneidplatten sind jeweils vorzugsweise um etwa 180° versetzt gegeneinander angeordnet. Die Schneidplatte 3 ist gegen die Schneidplatte 4 um etwa 180° versetzt. Gleiches gilt für die Schneidplatten 54, 54' sowie 55, 55'. Ist eine größere Zähnezahl (z=3 oder größer) gefordert, ist eine entsprechend größere Anzahl von Schneidplatten vorzusehen, d.h. es sind drei oder mehr Reihen von Schneidplatten an dem Werkzeugkörper 2 anzuordnen. Sind an der Werkzeugstirn drei Schneidplatten anzuordnen, werden diese in einem Abstand von vorzugsweise 120° zueinander angeordnet.

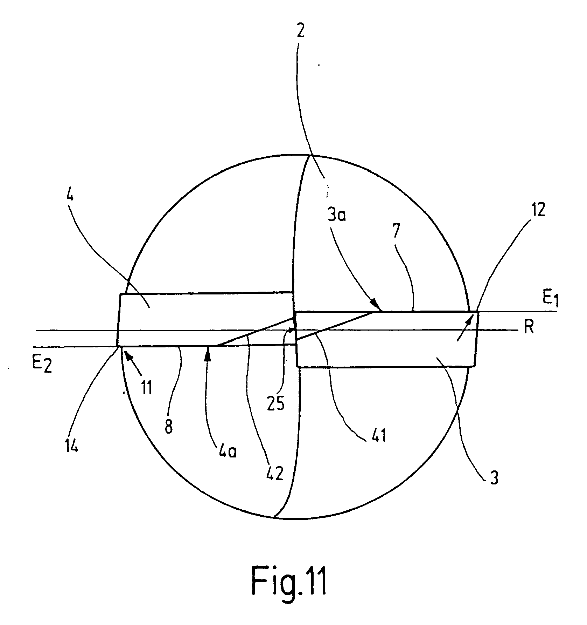

Allen vorstehend beschriebenen Ausführungsformen ist gemeinsam, dass die Schneidplatten 3, 4 mit ihren Oberseiten 3a, 4a gegeneinander versetzt sind. Zur Erläuterung wird auf Figur 11 verwiesen. Bezüglich einer Mittelebene oder Radialebene R, die die Drehachse 25 enthält, sind die Schneidplatten 3, 4 so angeordnet, dass die Oberseiten (Vorderseiten) 3a, 4a nicht in dieser Ebene R, sondern in eigenen Ebenen E1, E2 liegen. Diese Ebenen E1, E2 können parallel zueinander ausgerichtet sein, insbesondere wenn die Schneidplatten 3, 4 ohne Axialwinkel eingebaut sind. Sie können allerdings auch zu der Drehachse 25 geneigt angeordnet sein, so dass sie sich mit der Radialebene R in einer gemeinsamen Schnittlinie schneiden. Bei einem Schnitt parallel zu der in Figur 11 zugrundegelegten Zeichenebene sind die Schnittlinien der Zeichenebene mit den Ebenen E1 und E2, jedoch auch in diesem Fall parallel zueinander und parallel zu der Radialebene R. Diese Anordnung hat zur Folge, dass die Oberseiten 3a, 4a bezüglich der Radialebene R und einer in Figur 11 durch einen Pfeil D angedeuteten Drehrichtung voreilend angeordnet sind. Durch diese Voreilung wird an der Umfangsschneidkante 12, 14 ein positiver Radialfreiwinkel erzeugt, ohne dass an der Schneidplatte 3, 4 ein größerer Freiwinkel ausgebildet sein müßte. Außerdem wird die Möglichkeit geschaffen, dass die Schneidplatten 3, 4 mit ihren Seitenflächen aneinander oder an einem zwischen den Schneidplatten 3, 4 ausgebildeten Steg 29 des Werkzeugkörpers anliegen (siehe auch Figuren 1, 4, 5 und 7). Dies ergibt eine erheblich verbesserte Seitenabstützung der Schneidplatten 3, 4, was insbesondere beim Fräsen von Bedeutung ist. Um bei der derartigen voreilenden Anordnung der Schneidplatten eine gute Spanbildung und Zerspanungswirkung auch im Zentrumsbereich, d.h. in der Umgebung der Drehachse 25 zu erreichen, sind die Stirnschneidkanten 7, 8, ausgehend von den Eckschneidkanten 9, 11, hinter die Drehachse 25 geführt. Dies kann im einfachsten Fall, wie in Figur 11 veranschaulicht, dadurch geschehen, dass die zunächst parallel zu der Radialebene R verlaufenden Stirnschneidkanten 7, 8 in schräg verlaufende Innenschneidkanten 41, 42 übergehen, die hinter die Drehachse 25 führen. Alternativ kann die gesamte Stirnschneidkante 7, 8 gegen die Radialebene R geneigt angeordnet sein, um ausgehend von der Eckenschneidkanten 9, 11 hinter die Drehachse 25 zu führen. Der erstgenannte Fall wird wegen der einfacheren Geometrie der Schneidplatte und der robusteren Ausbildung derselben bevorzugt. Der axiale Einbauwinkel der Schneidplatten 3, 4 ist vorzugsweise Null.

Ein verbesserter Bohrnutenfräser weist einen Werkzeugkörper 2 mit stirnseitig symmetrisch zueinander angeordneten Plattensitzen 5, 6 auf. An diesen sind Schneidplatten 3, 4 angeordnet, deren Schneidkanten 7, 9, 12 sowie 8, 11, 14 (und gegebenenfalls 41, 42) vollständig identisch eingestellt sind, d.h. sich in Umfangsrichtung vollständig überdecken. Dadurch sind sowohl für den Bohrbetrieb als auch für den Fräsbetrieb jeweils zwei Schneidkanten aktiv, was die Zerspanungsleistung erhöht und beim Bohren sowie Fräsen jeweils gleiche Vorschübe ermöglicht. Durch die symmetrische Gestaltung ist der Bohrnutenfräser im Bohrbetrieb frei von Seitenkräften, was trotz hoher Vorschübe eine hohe Bearbeitungspräzision gestattet.

## Patentansprüche

1. Bohrnutenfräser (1)
mit einem Werkzeugkörper (2), der wenigstens einen ersten Plattensitz (5) und wenigstens einen zweiten Plattensitz (6) aufweist, die untereinander gleich ausgebildet und symmetrisch zu einer Drehachse (25) des Werkzeugkörpers (2) angeordnet sind,
mit einer ersten Schneidplatte (3) und mit einer zweiten Schneidplatte (4), die untereinander gleich ausgebildet sind und die jeweils eine Grundfläche, Seitenflächen und eine Oberseite (3a, 4a) aufweisen, die eine im Wesentlichen gerade ausgebildete Stirnschneidkante (7, 8), eine Eckenschneidkante (9, 11) und eine im Wesentlichen gerade ausgebildete Umfangsschneidkante (12, 14) festlegen,
wobei die Stirnschneidkanten (7, 8), die Eckenschneidkanten (9, 11) und die Umfangsschneidkanten (12, 14) in Axialrichtung (a) und in Radialrichtung (r) identisch positioniert sind wobei sich entweder:
a) die Stirnschneidkanten (7, 8) der beiden Schneidplatten (3, 4) wenigstens bis zu einem die Drehachse (25) umgebenden Drehzentrum erstrecken, das von inneren Schneidkanten (41, 42) der Schneidplatten festgelegt ist, oder
b) sich lückenlos an wenigstens eine der Schneidplatten (3, 4) eine innere Schneidplatte (23) anschließt, deren Schneidkante () sich wenigstens bis zu dem die Drehachse (25) umgebenden Drehzentrum erstreckt,
wobei die Oberseiten (3a, 4a) der Schneidplatten (3, 4) zueinander im Wesentlichen parallel versetzt angeordnet sind.

2. Bohrnutenfräser nach Anspruch 1, **dadurch gekennzeichnet, dass** die Stirnschneidkanten (7, 8), die Eckenschneidkanten (9, 11) und die Umfangsschneidkanten (12, 14) der beiden Schneidplatten (3, 4) jeweils gleiche Längen aufweisen.

3. Bohrnutenfräser nach Anspruch 1, **dadurch gekennzeichnet, dass** die Stirnschneidkanten (7, 8), die Eckenschneidkanten (9, 11) und die Umfangsschneidkanten (12, 14) der beiden Schneidplatten (3, 4) jeweils gleiche Formen aufweisen.

4. Bohrnutenfräser nach Anspruch 1, **dadurch gekennzeichnet, dass** die Umfangsschneidkanten (12, 14) der Schneidplatten (3, 4) auf einer zu der Drehachse (25) konzentrisch angeordneten Zylinderfläche (Z) angeordnet sind.

5. Bohrnutenfräser nach Anspruch 1, **dadurch gekennzeichnet, dass** die Stirnschneiden (7, 8) auf einer Kegelfläche (K) angeordnet sind, deren Kegelwinkel größer als 170° ist.

6. Bohrnutenfräser nach Anspruch 1, **dadurch gekennzeichnet, dass** die Plattensitze (3, 4) Anlageflächen (46, 47) aufweisen, die sich entlang der Drehachse (25) in geringem Abstand zu dieser erstrecken und der radialen Anlage der Schneidplatten (3, 4) dienen.

7. Bohrnutenfräser nach Anspruch 6, **dadurch gekennzeichnet, dass** die Anlageflächen (46, 47) in einem spitzen Winkel zu der Drehachse (25) angeordnet sind, so dass der Werkzeugkörper (2) im Bereich der Drehachse (25) einen zu dieser symmetrisch angeordneten Steg aufweist.

8. Bohrnutenfräser nach Anspruch 1, **dadurch gekennzeichnet, dass** die Plattensitze (5, 6) der stirnseitig angeordneten Schneidplatten (3, 4) ohne radiale Anlagefläche ausgebildet sind, so dass die Schneidplatten (3, 4) unmittelbar aneinander grenzen.

9. Bohrnutenfräser nach Anspruch 1, **dadurch gekennzeichnet, dass** die Plattensitze (5, 6) der Schneidplatten (3, 4) wenigstens eine Längsstufe (35, 36 - Fig. 5) zur radialen Abstützung der Schneidplatten (3, 4) aufweisen.

10. Bohrnutenfräser nach Anspruch 1, **dadurch gekennzeichnet, dass** die Schneidplatten (3, 4) jeweils durch eine Passschraube (17) gegen eine Anlagefläche (46, 47; 22) des Plattensitzes (5, 6) gehalten sind, die die Verschiebungssicherung der Schneidplatte (3, 4) in einer Richtung bewirkt.

11. Bohrnutenfräser nach Anspruch 1, **dadurch gekennzeichnet, dass** die Plattensitze (5, 6) der stirnseitigen Schneidplatten (3, 4) Auflageflächen (21) aufweisen, die von einer mit Gewinde versehenen Befestigungsöffnung durchsetzt und parallel zu der Drehachse (25) angeordnet sind.

12. Bohrnutenfräser nach Anspruch 1, **dadurch gekennzeichnet, dass** der Werkzeugkörper (2) im Anschluss an die für die stirnseitigen Schneidplatten (3, 4) vorgesehenen Plattensitze (5, 6) weitere Plattensitze (52, 53) für Umfangsschneidplatten (54, 55, 54', 55') aufweist, die Umfangsschneidkanten (56, 57, 56', 57') aufweisen, die sich mit den Umfangsschneidkanten (12, 14) der Schneidplatten (3, 4) sowie untereinander überlappen oder lückenlos an diese anschließen.

13. Bohrnutenfräser nach Anspruch 13, **dadurch gekennzeichnet, dass** die Plattensitze (5, 6) der Schneidplatten (3, 4) eine Querstufe (61) zur axialen Abstützung der Schneidplatte (3, 4) aufweisen.

14. Bohrnutenfräser nach Anspruch 1, **dadurch gekennzeichnet, dass** die Schneidplatten (3, 4) als Wendeschneidplatten ausgebildet sind.

## Claims

1. Drilling groove cutter (1)
with a tool body (2), which has at least a first tip seat (5) and at least a second tip seat (6), which are identical in configuration and are arranged symmetrically to a rotational axis (25) of the tool body (2),
with a first cutting tip (3) and with a second cutting tip (4), which are identical in configuration and respectively have a base face, side faces and an upper side (3a, 4a), which define a substantially straight front cutting edge (7, 8), a corner cutting edge (9, 11) and a substantially straight peripheral cutting edge (12, 14),
wherein the front cutting edges (7, 8), the corner cutting edges (9, 11) and the peripheral cutting edges (12, 14) are positioned identically in axial direction (a) and in radial direction (r), wherein either
a) the front cutting edges (7, 8) of the two cutting tips (3, 4) extend at least as far as a centre of rotation, which surrounds the rotational axis (25) and is defined by inner cutting edges (41, 42), or
b) an inner cutting tip (23) adjoins at least one of the cutting tips (3, 4) without any gap, its cutting edge (?) extending at least as far as the centre of rotation surrounding the rotational axis (25),
wherein the upper sides (3a, 4a) of the cutting tips (3, 4) are staggered substantially parallel to one another.

2. Drilling groove cutter according to Claim 1, **characterised in that** the front cutting edges (7, 8), the corner cutting edges (9, 11) and the peripheral cutting edges (12,14) of the two cutting tips (3,4) each have the same lengths.

3. Drilling groove cutter according to Claim 1, **characterised in that** the front cutting edges (7, 8), the corner cutting edges (9, 11) and the peripheral cutting edges (12, 14) of the two cutting tips (3, 4) each have the same shapes.

4. Drilling groove cutter according to Claim 1, **characterised in that** the peripheral cutting edges (12, 14) of the cutting tips (3, 4) are arranged on a cylinder surface (Z) arranged concentrically to the rotational axis (25).

5. Drilling groove cutter according to Claim 1, **characterised in that** the front cutting edges (7, 8) are arranged on a conical surface (K), the cone angle of which is greater than 170°.

6. Drilling groove cutter according to Claim 1, **characterised in that** the tip seats (3,4) have contact surfaces (46, 47), which extend along the rotational axis (25) at a short distance from this and serve for radial contact of the cutting tips (3, 4).

7. Drilling groove cutter according to Claim 6, **characterised in that** the contact surfaces (46, 47) are arranged at an acute angle to the rotational axis (25), so that in the region of the rotational axis (25) the tool body (2) has a web symmetrically arranged thereto.

8. Drilling groove cutter according to Claim 1, **characterised in that** the tip seats (5, 6) of the cutting tips (3, 4) arranged on the front side are configured without a radial contact surface, so that the cutting tips (3, 4) directly adjoin one another.

9. Drilling groove cutter according to Claim 1, **characterised in that** the tip seats (5, 6) of the cutting tips (3, 4) have at least one longitudinal step (35, 36 - Figure 5) for radial support of the cutting tips (3, 4).

10. Drilling groove cutter according to Claim 1, **characterised in that** the cutting tips (3, 4) are respectively held against a contact surface (46, 47; 22) of the cutting tip seat (5, 6) by a fitted screw (17), which secures the cutting tip (3, 4) against displacement in one direction.

11. Drilling groove cutter according to Claim 1, **characterised in that** the tip seats (5, 6) of the front cutting tips (3, 4) have supporting surfaces (21), through which a fastening opening provided with a thread passes and which are arranged parallel to the rotational axis (25).

12. Drilling groove cutter according to Claim 1, **characterised in that** adjoining the tip seats (5, 6) provided for the front cutting tips (3, 4), the tool body (2) has further tip seats (52, 53) for peripheral cutting tips (54, 55, 54', 55'), which have peripheral cutting edges (56, 57, 56', 57'), which overlap with the peripheral cutting edges (12, 14) of the cutting tips (3, 4) and also overlap one another or adjoin these without any gaps.

13. Drilling groove cutter according to Claim 13, **characterised in that** the tip seats (5, 6) of the cutting tips (3,4) have a transverse step (61) for axial support of the cutting tip (3, 4).

14. Drilling groove cutter according to Claim 1, **characterised in that** the cutting tips (3, 4) are configured as reversible cutting tips.

## Revendications

1. Fraise à rainurer (1)
avec un corps d'outil (2) qui présente au moins un premier siège de plaquette (5) et au moins un deuxième siège de plaquette (6), qui sont identiques entre eux et sont disposés de manière symétrique par rapport à un axe de rotation (25) du corps d'outil (2),
avec une première plaquette de coupe (3) et une deuxième plaquette de coupe (4) qui sont identiques entre elles et présentent chacune une face de base, des faces latérales et une face supérieure (3a, 4a) qui définissent une arête de coupe frontale (7, 8) essentiellement rectiligne, une arête de coupe d'angle (9, 11) et une arête de coupe périphérique (12, 14) essentiellement rectiligne,
les arêtes de coupe frontales (7, 8), les arêtes de coupe d'angle (9, 11) et les arêtes de coupe périphériques (12, 14) étant positionnnées de manière identique dans la direction axiale (a) et dans la direction radiale (r) et soit:
a) les arêtes de coupe frontales (7, 8) des deux plaquettes de coupe (3, 4) s'étendant au moins jusqu'à un centre de rotation qui entoure l'axe de rotation (25) et est défini par des arêtes de coupe intérieures (41, 42) des plaquettes de coupe,
soit
b) une plaquette de coupe (23) intérieure se raccordant sans jeu à au moins une des plaquettes de coupe (3, 4), plaquette dont l'arête de coupe () s'étend au moins jusqu'au centre de rotation entourant l'axe de rotation (25),
les faces supérieures (3a, 4a) des plaquettes de coupe (3, 4) étant décalées l'une par rapport à l'autre, essentiellement de manière parallèle.

2. Fraise à rainurer selon la revendication 1, **caractérisée par le fait que** les arêtes de coupe frontales (7, 8), les arêtes de coupe d'angle (9, 11) et les arêtes de coupe périphériques (12, 14) des deux plaquettes de coupe (3, 4) ont chacune des longueurs identiques.

3. Fraise à rainurer selon la revendication 1, **caractérisée par le fait que** les arêtes de coupe frontales (7, 8), les arêtes de coupe d'angle (9, 11) et les arêtes de coupe périphériques (12, 14) des deux plaquettes de coupe (3, 4) ont chacune des formes identiques.

4. Fraise à rainurer selon la revendication 1, **caractérisée par le fait que** les arêtes de coupe périphériques (12, 14) des plaquettes de coupe (3, 4) sont disposées sur une surface cylindrique concentrique avec l'axe de rotation (25).

5. Fraise à rainurer selon la revendication 1, **caractérisée par le fait que** les arêtes de coupe frontales (7, 8) sont disposées sur une surface de cône (K), dont l'angle au sommet est supérieur à 170°.

6. Fraise à rainurer selon la revendication 1, **caractérisée par le fait que** les sièges de plaquettes (3, 4) présentent des surfaces d'appui (46, 47) qui s'étendent le long de l'axe de rotation (25) à faible distance de celui-ci, et servent d'appui radial pour les plaquettes de coupe (3, 4).

7. Fraise à rainurer selon la revendication 6, **caractérisée par le fait que** les surfaces d'appui (46, 47) forment un angle aigu avec l'axe de rotation (25), de telle sorte que le corps d'outil (2), dans la région de l'axe de rotation (25), présente une cloison symétrique par rapport audit axe de rotation.

8. Fraise à rainurer selon la revendication 1, **caractérisée par le fait que** les sièges de plaquettes (5, 6) des plaquettes de coupe (3, 4) disposées côté frontal ne comportent pas de surface d'appui radiale de sorte que les plaquettes de coupe (3, 4) sont directement en contact.

9. Fraise à rainurer selon la revendication 1, **caractérisée par le fait que** les sièges de plaquettes (5, 6) des plaquettes de coupe (3, 4) présentent au moins un gradin longitudinal (35, 36 - fig. 5) pour l'appui radial des plaquettes de coupe (3, 4).

10. Fraise à rainurer selon la revendication 1, **caractérisée par le fait que** les plaquettes de coupe (3, 4) sont tenues chaque fois contre une surface d'appui (46, 47; 22) du siège de plaquette (5, 6) par une vis ajustée (17) qui bloque la plaquette de coupe (3, 4)en translation dans une direction.

11. Fraise à rainurer selon la revendication 1, **caractérisée par le fait que** les sièges de plaquettes (5, 6) des plaquettes de coupe (3, 4) frontales présentent des surfaces d'appui (21) qui sont percées d'une ouverture de fixation pourvue d'un filetage et sont disposées parallèlement à l'axe de rotation (25).

12. Fraise à rainurer selon la revendication 1, **caractérisée par le fait que** le corps d'outil (2) à la suite des sièges de plaquettes (5, 6) prévus pour les plaquettes de coupe (3, 4) frontales, présente des sièges de plaquettes (52, 53) supplémentaires pour des plaquettes de coupe (54, 55, 54', 55') pourvues d'arêtes de coupe périphériques (56, 57, 56', 57') qui se chevauchent avec les arêtes de coupe périphériques (12, 14) des plaquettes de coupe (3, 4) ou se raccordent sans jeu à celles-ci.

13. Fraise à rainurer selon la revendication 13, **caractérisée par le fait que** les sièges de plaquettes (5, 6) des plaquettes de coupe (3, 4) présentent un gradin transversal (61) pour l'appui axial des plaquettes de coupe (3, 4).

14. Fraise à rainurer selon la revendication 13, **caractérisée par le fait que** les plaquettes de coupe (3, 4) sont conformées en plaquettes amovibles.
